Europäisches Patentamt

European Patent Office

Office européen des brevets

(19)

(11) Veröffentlichungsnummer: **0 107 255**

**B1**

(12) # EUROPÄISCHE PATENTSCHRIFT

(45) Veröffentlichungstag der Patentschrift:
13.01.88

(51) Int. Cl.⁴: **G 01 N 21/74**

(21) Anmeldenummer: **83201492.2**

(22) Anmeldetag: **19.10.83**

(54) **Küvette für die Atomabsorptionsspektrometrie.**

(30) Priorität: **23.10.82 DE 3239253**

(43) Veröffentlichungstag der Anmeldung:
**02.05.84 Patentblatt 84/18**

(45) Bekanntmachung des Hinweises auf die Patenterteilung:
**13.01.88 Patentblatt 88/2**

(84) Benannte Vertragsstaaten:
**AT BE CH DE FR GB IT LI NL SE**

(56) Entgegenhaltungen:
EP-A-0 030 405
EP-A-0 069 079
DE-A-2 221 184
DE-A-3 030 424
DE-A-3 110 783
DE-U-7 137 044
GB-A-2 064 500
GB-A-2 082 880

(73) Patentinhaber: **Philips Patentverwaltung GmbH, Wendenstrasse 35 Postfach 10 51 49, D-2000 Hamburg 1 (DE)**

(84) Benannte Vertragsstaaten: **DE**

(73) Patentinhaber: **N.V. Philips' Gloeilampenfabrieken, Groenewoudseweg 1, NL- 5621 BA Eindhoven (NL)**

(84) Benannte Vertragsstaaten:
**BE CH FR GB IT LI NL SE AT**

(72) Erfinder: **Lersmacher, Bernhard, Dr., Schlossweiherstrasse 31, D-5100 Aachen (DE)**

(74) Vertreter: **Piegler, Harald, Dipl.- Chem., Philips Patentverwaltung GmbH Wendenstrasse 35 Postfach 10 51 49, D-2000 Hamburg 1 (DE)**

EP 0 107 255 B1

## Beschreibung

Die Erfindung betrifft eine Küvette für die Atomabsorptionsspektrometrie (AAS), bestehend aus einem Rohr aus Elektrographit, pyrolytischen Graphit oder glasartigen Kohlestoff und flanschförmigen oder flanschähnlichen Teilen, die an den Rohrenden oder in deren Nähe fest mit dem Rohr verbunden sind.

Die flanschförmigen oder flanschähnlichen Teile werden nachfolgend auch kurz "Flansche" oder "Kontaktringe" genannt.

Eine derartige Küvette mit Flanschen aus Elektorgraphit ist aus DE-A-2 221 184 bekannt. Die Küvette wird mit elektrischem Strom aufgeheizt, indem der elektrische Strom den Rohrenden im wesentlichen in radialer Richtung von außen her über die flanschförmigen oder flanschähnlichen Teile zugeführt wird, die ebenfalls aus Elektrographit bestehen und insbesondere in ihrer Dicke und Dickenverteilung so gestaltet sind, daß in ihnen selbst noch soviel Wärme erzeugt wird und ihre Wärmeleitfähigkeit so klein ist, daß eine Abkühlung der Rohrenden in ausreichendem Ausmaß verhindert wird. Die Flansche sind entweder fest mit dem Rohr verbunden, so daß Flansche und Rohr eine einzige zusammenhängende Baueinheit darstellen, oder Flansche und Rohr sind mechanisch getrennte Einzelteile, die sich an den Rohrenden an Kontaktflächen berühren.

Aus DE-U-7 137 044 ist eine Küvette bekannt, die aus einem Graphitrohr besteht, dessen Enden als Ringflansche ausgebildet sind. Auch hier stellen Flansche und Rohr eine einzige zusammenhängende Baueinheit dar.

Aus DE-A-3 110 783 ist eine Vorrichtung zum Zerstäuben einer Probe für die AAS bekannt, bei der eine rohrförmige Graphitküvette von verschiebbaren Graphitelektroden gehaltert wird.

Aus EP-A-0 030 405 ist es bekannt, rohrförmige Küvetten, die aus Graphit, insbesondere Elektrographit, oder mikroporösem glasartigem Kohlenstoff bestehen, mit pyrolytischem Graphit - nachfolgend auch Pyrographit genannt - zu beschichten. Ein ähnliches Beschichtungsverfahren ist aus GB-A-2 064 500 bekannt, wobei die Küvetten aus pyrolytischem Graphit bestehen.

In dem unter Artikel 54(3) EPÜ fallenden Dokument EP-A-0 089 079 ist eine Küvette mit einem dünnwandigen Rohr aus pyrolytischem Graphit beschrieben, das an den Enden mit Flanschen aus Elektrographit, glasartigem Kohlenstoff oder hochschmelzenden Metallen versehen ist. Rohr und Flansche werden mittels einer umhüllenden Pyrographitschicht zu einer Einheit verbunden.

Bei der weiteren Entwicklung dieses Küvettentyps, insbesondere bei Untersuchungen seiner thermischen und elektrischen Belastbarkeit sowie seiner Lebensdauer unter praxisnahen Bedingungen, wurde gefunden, daß Küvetten der genannten Art einige Nachteile aufweisen, wenn die Flansche aus den genannten Materialien bestehen.

Der Erfindung liegt daher die Aufgabe zugrunde, die thermische und elektrische Belastbarkeit sowie die Lebensdauer der Küvetten zu verbessern.

Diese Aufgabe wird erfindungsgemäß dadurch gelöst, daß bei einer Küvette der eingangs genannten Art die flanschförmigen oder flanschähnlichen Teile aus pyrolytischem Graphit bestehen und daß das Rohr und die flanschförmigen oder flanschähnlichen Teile durch eine gemeinsame Umhüllung aus pyrolytischem Graphit miteinander verbunden sind.

Dabei gibt es, der Schichtenstruktur von hochorientiertem Pyrographit entsprechend, vorzugsweise zwei Möglichkeiten, die Flansche anzufertigen, nämlich

a) die Orientierung so zu wählen, daß die Schichtebenen der Flansche senkrecht zur Längsachse des Küvettenrohres ausgerichtet sind - sog. radiale Schichtung - und

b) die Orientierung der Flansche so zu legen, daß die Schichtebenen überall parallel zur Küvettenachse bzw. -oberfläche verlaufen, das Küvettenrohr also ringförmig von den Schichtebenen umfaßt wird - sog. azimutale oder tangentiale Schichtung-.

"Radial" bedeutet, die Orientierung der Schichten ist derart, daß die Vektoren der guten thermischen und elektrischen Leitfähigkeit der Flansche radial zur Küvettenachse ausgerichtet sind. Im anderen Falle der "tangentialen" oder "azimutalen" Schichtung sind die gleichen Vektoren parallel zur Küvettenachse ausgerichtet.

Im Verlaufe einer Reihe von Versuchen wurde nämlich festgestellt, daß die erfindungsgemäßen beiden Ausführungsformen zu Küvetten führen, die sich zum Teil in ihrem Betriebsverhalten in unerwartet hohem Maße voneinander unterscheiden. Dies gilt insbesondere für ihr Aufheiz- und Abkühlverhalten sowie für die Art der Temperaturverteilung und deren zeitlichen Verlauf längs der Küvettenachse.

Bei einer weiteren Ausführungsform der Erfindung wird die bei der Nachbeschichtung aufgebrachte umhüllende Pyrographitschicht am Flanschumfang, also an den eigentlichen Kontaktflächen, nachträglich entfernt. Diese Maßnahme beeinflußt den Energiefluß positiv, insbesondere bei den Küvetten mit radial orientierten Flanschen.

Die Erfindung wird anhand einer Zeichnung und einiger Ausführungsbeispiele näher erläutert. In der Zeichnung zeigen in perspektivischer Darstellung

Fig. 1 eine Rohrküvette mit einem Flansch aus Pyrographit in radialer Schichtung,

Fig. 2 eine Rohrküvette mit einem Flansch aus Pyrographit in azimutaler bzw. tangentialer Schichtung,

Fig. 3 ein Werkstück aus Pyrographit für die Herstellung von ringförmigen Flanschen mit radialer Schichtung und

Fig. 4 ein Werkstück aus Pyrographit für die Herstellung von ringförmigen Flanschen mit azimutaler bzw. tangentialer Schichtung.

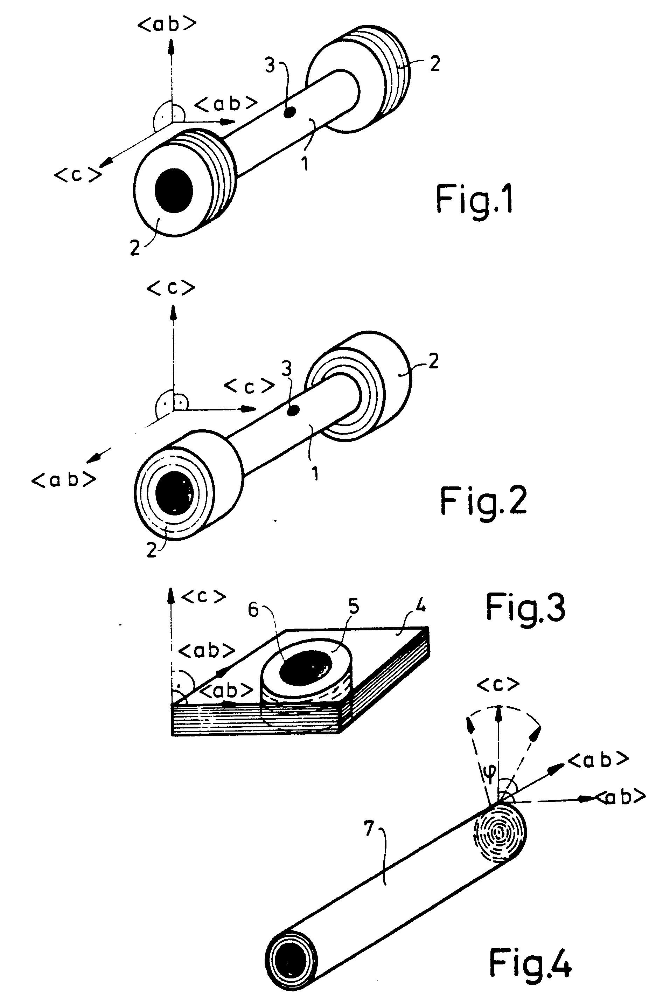

In den Fig. 1 und 2 ist jeweils ein Basisrohr 1 aus pyrolytischem Graphit dargestellt, an deren Enden Kontaktringe 2 aus pyrolytischem Graphit angeordnet sind. Das Rohr 1 ist mit einer Probeneinlaßöffnung 3 versehen. Das Ganze ist jeweils mit einer (nicht dargestellten) Umhüllung aus pyrolytischem Graphit bedeckt.

In den Fig. 1 bis 4 sind ferner die kristallographischen Achsen des pyrolytischen Graphits dargestellt, wobei die mit <ab> bezeichneten Pfeile die Lage der Basisebenen des Graphits (0002) angeben und die mit <c> bezeichneten Pfeile die Richtung senkrecht dazu, also die Lage der kristallographischen c-Achsen des hexagonalen Graphitkristalls bedeuten. In Fig. 4 ist die Winkelverteilung der c-Achsen, die sich über dem gesamten $2\pi$-Bereich (0 bis 360°) erstreckt, durch $\Delta\varphi$ angedeutet.

Für Flansche mit radialer Orientierung benötigt man als Ausgangsmaterial möglichst ebenen, dickwandigen Pyrographit (Fig. 3), aus dem zunächst durch Abtragen (Schleifen) senkrecht zur Schichtung ebene Plättchen 4 der gewünschten Dicke hergestellt werden, die dann - vorzugsweise durch Rundschleifen - zu Scheiben 5 und durch Anbringen einer zentralen Bohrung 6 für die Aufnahme des Küvettenrohres - auf die gewünschten Flanschringmaße weiter verarbeitet werden.

Für Flansche mit azimutaler (tangentialer) Schichtung eignen sich als Ausgangsmaterial hinreichend dickwandige Rohre 7 (Fig. 4) aus Pyrographit, die durch Langzeitabscheidung aus der Gasphase auf einem zylinderförmigen Dorn, der aus einem hochschmelzenden, d.h. bei 2300 K und höher schmelzendem Material mit möglichst hohem thermischem Ausdehnungskoeffizienten (z. B. Elektrographit, glasartiger Kohlenstoff, Tantal, Wolfram) besteht. Nach Abziehen von den Substratdornen werden die Rohre dann durch Schneiden, Bohren, Rund- und Planschleifen auf die gewünschten Maße der Ringflansche weiterverarbeitet.

Bei allen Bearbeitungsgängen muß und kann durch Hilfsmaßnahmen verhindert werden, daß die leicht delaminierbaren Pyrographitteile zerstört werden. Für den Paßsitz der Flanschringe gelten die in EP-A-0 089 079 genannten Bedingungen. Auch die Verbindung von Flanschen 2 und Basisrohr 1 wird in der dort beschriebenen Weise durch umhüllende Nachbeschichtung in Schichtdicken von etwa 10 bis 100 µm, vorzugsweise 20 µm, vorgenommen.

Die Pyrographitflansche haben parallel zur Schichtung einen relativ niedrigen spezifischen Widerstand von 1,8 bis 4,5.10$^{-4}$ Ω cm. Dieser ist zwar um einen Faktor 100 höher als derjenige von Kupfer, aber um einen Faktor 10 niedriger als der von Elektrographit. Flansche aus Pyrographit in radialer Orientierung (a) bewirken also, in Verbindung mit einem dünnwandigen Küvettenrohr, ein relativ schnelles Aufheizen des letzteren, und zwar derart, daß der stärkste Temperaturanstieg in der Küvettenmitte, also am Ort der zu analysierenden Probe, erfolgt und damit dort die höchste Temperatur ereicht wird. Andererseits setzt nach Abschalten der elektrischen Versorgung wegen der hohen Wärmeleitfähigkeit parallel zur Schichtung von 3,2 W/cm K, die etwa der von Kupfer (3,98 W/cm K) entspricht, eine relativ rasche Abkühlung ein, was insbesondere bei Serienanalysen i.a. sehr erwünscht ist.

Bei Pyrographitflanschen mit azimutaler Schichtung (b) ist dagegen eine völlig abweichende Aufheiz- und Abkühlcharakteristik zu beobachten. Da der spezifische elektrische Widerstand senkrecht zur Schichtung abhängig von der Perfektion der Struktur um einen Faktor 100 bis 1000 höher als der parallel zur Schichtung ist, findet der Umsatz der elektrischen Energie in Wärmeenergie vorzugsweise in den Flanschen statt. Dies hat zur Folge, daß an den Flanschen eine hohe Temperatur aufgebaut wird, die sich je nach den Bedingungen schneller oder langsamer zur Küvettenmitte, also zum Probenort hin, ausbreitet. Dieses spezifische Verhalten kann für bestimmte Analysen von Bedeutung sein, da die von den Enden her aufeinander zulaufenden Hochtemperaturfronten ein Kondensieren von Analysen- bzw. Probensubstanz an den - im Normalfalle - kälteren Enden verhindern und darüber hinaus eine Konzentrierung der Analysensubstanz in der Küvettenmitte bewirken. Dieses Verhalten wird durch die sehr geringe thermische Leitfähigkeit senkrecht zur Schicht (0,03 W/cm K) noch begünstigt. Die Flansche mit der Orientierung (b) bilden also eine wirksame Wärmeflußbarriere, was eine entsprechend langsame Abkühlung mit sich bringt. Insofern kann man die Küvetten mit Flanschen der Orientierung (a) als "flink", die mit der der Orientierung (b) als "träge" bezeichnen.

Bei beiden Typen wurde zudem die Beobachtung gemacht, daß auch nach extremer Beanspruchung im Wechsellastbetrieb, das heißt, nach einigen Tausend impulsartigen Belastungen mit je 10 bis 15 kW · s, bei denen jeweils maximale Temperaturen von $T_{max}$ = 2400 bis 2800 K erreicht wurden, keinerlei Beschädigungen an den Flanschküvetten erkennbar waren. Im Gegensatz dazu ist - bei vergleichbarer Belastung - bei Flanschen aus Elektrographit häufig eine Beschädigung der letzteren - abgesplitterte Teilchen, Risse, Loslösen vom Basisrohr - zu beobachten. Küvetten mit Flanschen aus pyrolytischem Graphit sind also mechanisch stabiler und somit noch betriebssicherer als solche mit Flanschen aus Elektrographit.

Es wurde eine Anzahl von Küvettenrohren aus dünnwandigem, d.h. etwa 350 µm dickem pyrolytischem Graphit in den Abmessungen 5,8 mm Innendurchmesser, 5,1 mm Außendurchmesser, Längen 30 mm und 32 mm, mit massiven Pyrographitflanschen der beiden im Vorstehenden beschriebenen Orientierungen bestückt. Die ringförmigen Flansche hatten die Abmessungen 10,0 mm Innendurchmesser, 5,8 mm Außendurchmesser, Breite 2,0 mm. Unter Berücksichtigung der Leitfähigkeitsanisotropie des pyrolytischen Graphits lassen sich für die elektrischen Widerstände R in erster Näherung folgende Werte berechnen:

1) Für das eigentliche Küvetenrohr (spezifischer Widerstand parallel zur Schichtung 1,8 bis 4,5 · $10^{-4}$ Ω cm)

$$R \approx 2{,}0 \cdot 10^{-4} \cdot \tfrac{3{,}0}{0{,}06} \approx 1{.}10^{-2}\,\Omega$$

2) Für den Flanschring mit der radialen (a) Orientierung (spezifischer Widerstand wie 1))

$$R \approx 2{,}0 \cdot 10^{-4} \cdot \tfrac{0{,}2}{0{,}503} \approx 0{,}795 \cdot 10^{-4}\,\Omega$$

3) Für den Flanschring mit der azimutalen (b) - tangentialen - Schichtung (spezifischer Widerstand senkrecht zur Schichtung etwa 3,5 · $10^{-1}$ Ω cm)

$$R \approx 3{,}5 \cdot 10^{-1} \cdot \tfrac{0{,}2}{0{,}053} \approx 1{,}39 \cdot 10^{-1}\,\Omega$$

Es ergeben sich also etwa folgende Verhältnisse: Bei Flanschen mit radialer Schichtung ist der Widerstand des Küvettenrohres um einen Faktor 100 größer als der der Flansche. Der Energieumsatz von elektrischer zu thermischer Energie wird also vorzugsweise in der Küvettenmitte stattfinden. Die Flansche mit azimutaler Schichtung haben dagegen einen um einen Faktor 10 höheren Widerstand als das eigentliche Küvettenrohr, der Energieumsatz wird also zunächst und vorzugsweise in den Flanschen stattfinden. Gleichsinnig wirken die Wärmewiderstände in den Flanschmaterialien. Radiale Orientierung ist gleichbedeutend mit beschleunigtem Wärmeaustausch, azimutale Orientierung ist gleichbedeutend mit verzögertem Wärmeaustausch. Mit der vorstehenden Überschlagsrechnung kann natürlich das komplexe Wechselspiel der Ströme von elektrischer und thermischer Energie nicht vollständig erfaßt werden, zumal im Realfall keine Gleichgewichtszustände erreicht werden. Zur qualitativen Beschreibung des Systems ist sie jedoch geeignet, wie im Experiment vielfach bestätigt werden konnte. Beispielsweise betrug die Aufheizzeit t auf eine Temperatur von etwa 2500 K in der Küvettenmitte bei sonst gleichen Abmessungen und gleicher Energieeinspeisung

t = 3s bei radialer Flanschorientierung (a) und

t = 15s bei azimutaler Flanschorientierung (b).

AAS-Küvetten mit Flanschen aus pyrolytischem Graphit haben sich im Wechsellasttest (n ≥ 5000 Lastpulse) hervorragend bewährt. Sie zeigen nach dieser Belastung (Temperatur-Zeit-Zyklus: 12 s eingeschaltet, $T_{max}$; ≈ 2800 K; 120 s Abkühlphase) keinerlei Beschädigungen. Durch Wahl der Orientierung des Pyrographits läßt sich einerseits eine sehr "flinke" Küvette realisieren, bei der die Erwärmung in der Mitte der Küvette (am Probenort) am schnellsten erfolgt. Andererseits kann eine "träge" Küvette hergestellt werden, die sich bei ebenfalls guter mechanischer Stabilität dadurch auszeichnet, daß sie sich von den Kontakten her aufheizt, mit innerhalb von 10 bis 20 s auf die Küvettenmitte hinlaufenden Hochtemperaturfronten. Dieser Typ einer Flanschküvette verhindert die "Verarmung" an Analysensubstanz durch Verdampfung am Probenort und Kondensation an "kalten" Stellen, wie sie bei den bisher gebräuchlichen Küvetten nicht zu vermeiden ist.

**Patentansprüche**

1. Küvette für die Atomabsorptionsspektrometrie, bestehend aus einem Rohr aus Elektrographit, pyrolytischen Graphit oder glasartigen Kohlenstoff und flanschförmigen oder flanschähnlichen Teilen, die an den Rohrenden oder in deren Nähe fest mit dem Rohr verbunden sind, bei der die flanschförmigen oder flanschähnlichen Teile (2) aus pyrolytischem Graphit bestehen und das Rohr (1) und die flanschförmigen oder flanschähnlichen Teile durch eine gemeinsame Umhüllung aus pyrolytischem Graphit miteinander verbunden sind.

2. Küvette nach Anspruch 1, bei der die Schichtebenen des pyrolytischen Graphits in den flanschförmigen oder flanschähnlichen Teilen (2) senkrecht zur Längsachse des Rohres (1) ausgerichtet sind.

3. Küvette nach Anspruch 1, bei der die Schichtebenen des pyrolytischen Graphits in den flanschförmigen oder flanschähnlichen Teilen (2) überall parallel zur Längsachse bzw. Oberfläche des Rohres (1) verlaufen.

4. Küvette nach einem der Ansprüche 1 bis 3, bei der die Umhüllung aus pyrolytischem Graphit am Umfang der flanschförmigen oder flanschähnlichen Teile (2) entfernt worden ist.

**Claims**

1. A cuvette for atomic absorption spectroscopy consists of a tube of electrographite, pyrolytic graphite or vitreous carbon, and flange-shaped or flange-like parts which are rigidly bonded to the tube at the ends of the tube or in the proximity thereof, in which the flange shaped or flange-like parts (2) consist of pyrolystic graphite, and the tube (1) and the flange-shaped or flange-like parts are bonded together by a common envelope of pyrolytic graphite.

2. A cuvette as claimed in Claim 1, in which the layer planes of the pyrolytic graphite in the flange-like parts (2) are directed perpendicularly to the longitudinal axis of the tube (1).

3. A cuvette an claimed in Claim 1, in which the layer planes of the pyrolytic graphite in the flange-shaped or flange-like parts (2) extend everywhere parallel to the longitudinal axis and the surface of the tube (1), respectively.

4. A cuvette an claimed in any of the Claims 1-3, in which the envelope of pyrolytic graphite has been removed at the circumference of the flange-shaped or flange-like parts (2).


**Revendications**

1. Cuvette pour la spectroscopie par absorption atomique, constituée par un tube en électrographite, graphite pyrolytique ou carbone vitreux, et des parties en forme de flasque ou ressemblant à des flasques, qui sont fixées au tube aux extrémités de ce dernier ou dans la proximité des extrénités, dont les parties en forme de flasque ou ressemblant à des flasques sont constituées par du graphite et que le tube et les parties en forme de flasque ou ressemblant à des flaques sont reliées entre eux par une enveloppe commune en graphite pyrolytique.

2. Cuvette selon la revendication 1, dans laquelle les plans de la structure stratifiée en graphite pyrolytique, dont les parties en forme de flasque ou ressemblant à des flasques, s'étendent perpendiculairement à l'axe longitudinal du tube 1.

3. Cuvette selon la revendication 1, dans laquelle les plans de la structure stratifiée en graphite pyrolytique dans les parties (2) en forme de flasque ou ressemblant à des flasques, s'étendent partout parallèlement à l'axe longitudinal respectivement à la surface du tube (1).

4. Cuvette selon l'une des revendications 1 à 3, dans laquelle l'enveloppe en graphite pyrolytique a été enlevée à la circonférence des parties (2) en forme de flasque ou ressemblant à des flasques.

Fig.1

Fig.2

Fig.3

Fig.4